# EUROPEAN PATENT SPECIFICATION

(11) **EP 3 750 387 B1**
(45) Date of publication and mention of the grant of the patent: **30.08.2023**
(21) Application number: 19000463.0
(22) Date of filing: 10.10.2019
(51) Int. Cl.: A01B 73/04

(54) **AGRICULTURAL TRAILING DEVICE**
LANDWIRTSCHAFTLICE ANHÄNGEVORRICHTUNG
DISPOSITIF D'ATTELAGE AGRICOLE

(30) Priority: 13.06.2019 SI 201900115
(43) Date of publication of application: 16.12.2020
(73) Proprietor: INO Brezice d.o.o., 8262 Krska vas (SI)
(72) Inventor: Vogrin, Tone, 8281 Senovo (SI); Znidersic, Jurij, 8250 Brezice (SI)
(74) Representative: Golmajer Zima, Marjanca

(56) References cited:
- EP-A1- 0 316 560
- EP-A1- 3 095 316
- JP-A- H08 191 610
- US-A- 4 136 743

## Description

### Subject of Invention

The subject of the invention is a large-width agricultural trailing device such as a tractor attachment, more specifically a mulching device that can be connected to a tractor for tillage purposes and driven by a tractor motor via a connecting shaft, wherein the tractor attachment can be folded for transportation purposes to such a position to meet the traffic regulations for the transport of such machinery.

### Technical Problem

The technical problem is to configure such a large-width tractor attachment, such as a mulching device, which can be easily transferred from a working position to a transport position without first aligning the respective rotor of the mulching device, wherein the transfer to the transport position will be safe and will not cause any damage to the drive parts. At the same time, the dimensions of the tractor attachment in the transport position will meet the traffic regulations, while the largest possible working width will be achieved.

### Prior Art

In agriculture, different tractor attachments are used for tillage. A tractor attachment is usually secured to a tractor via a three-point linkage at the rear end of the tractor. To speed up a particular task or because of the size of the areas to be tilled, there is a tendency for tractor attachments to be as wide as possible. An even greater tilling width is achieved by using two in-line tractor attachments, which are arranged symmetrically with respect to the tractor or the direction of tractor's driving. The width of such tillage attachments is a problem when such attachments need to be transported, especially when the transport is carried out on open roads, where traffic regulations must be observed. The regulations stipulate maximum dimensions for vehicles involved in traffic, such as the width and height of the vehicle. The width of a vehicle should not exceed the width of the driving lane of the roadway, which is 3 m on average, while the height is often limited to 4 m. Therefore, a tractor attachment must be folded before transportation in order not to exceed the permissible width and height specified for the vehicle on the road. Consequently, these requirements determine the maximum working width of a tractor attachment or the method of folding the attachment.

The driving power needed for the operation of the tractor attachment, such as mulching device, harrow, mower and the like, is transferred to a drive shaft by means of a connecting shaft, gear, belt or chain transmission and a clutch that is part of the system, said drive shaft being arranged on the tractor attachment in such a way that it is perpendicular to the direction of tractor's driving. A further transfer of the driving power to an operating member of the tractor attachment, such as the rotor of a mulching machine, can be executed in various ways. One such method is by using a Cardan shaft. During normal operation, a Cardan joint adapts to the terrain, reaching an angle between the forks of -20° to 20°, which still enables the Cardan shaft to function normally. When moving the tractor attachment from a working position to a transport position, the Cardan shaft joint must be aligned to a position where the forks of the joint reach approximately the right angle.

Before transporting a tractor attachment, it must be transferred from the working position to the transport position. When the driving power is supplied to the operating member of the tractor attachment via a drive shaft and a Cardan shaft, the Cardan shaft must be positioned - prior to the tractor attachment such as a mulching device is transferred from the working position to the transport position - in such a way that the Cardan shaft joint assumes a position, in which the forks of the Cardan joint are aligned at right angles to each other. The Cardan joint aligns itself to the required position if the drive shaft rotates freely during the folding process. The rotation of the drive shaft is usually difficult because it is installed in the system with certain inertia and resistance against rotation. Tractors are often equipped with a Cardan brake that gets activated when the operator switches off the drive of that shaft. At that time, the entire drive of the machine is blocked. If the machine's drive is provided with a freewheel clutch, the Cardan joint can rotate freely only in the direction of normal operation of the clutch in order to be folded at a right angle. If, prior to folding the machine, the Cardan joint is aligned so that it will self-align in the direction of machine operation, the folding will be smooth. If, prior to folding the machine, the Cardan joint is aligned so that it will self-align in the opposite direction to the machine direction, the self-alignment will be disabled due to the Cardan drive brake. In this case, overloading and damage to the joint or drive elements will occur during the machine folding.

In order to prevent damage that could occur during the transition of the tractor attachment from the working position to the transport position, the operator of the tractor and the tractor attachment must switch off the Cardan shaft brake or shift the Cardan shaft to neutral before folding. Such a solution is bad due to the influence of the human factor. If the operator fails to strictly follow the instructions, there is a good chance of the drive components of the machine getting damaged. In addition, putting the Cardan shaft in neutral on some tractors is a difficult process that also requires some time. Due to the system's inertia and resistance to rotation, a situation may occur, in which the self-alignment of the Cardan shaft fails to work satisfactorily, resulting in damage to the drive elements.

When Cardan drives are used, there are known solutions, in which a dual Cardan drive is used. Such a solution allows for folding without a risk of destruction in any position of the Cardan joint. The disadvantage of this solution is that the tractor attachment can only be folded up to 80° with respect to the vertical axis, wherein the point of rotation, around which the tractor attachment rotates, is raised by a certain height from the ground. As a result, the entire tractor attachment is raised. The described solution allows the tractor attachment to be moved from the working position to the transport position independently of the Cardan shaft position. The outer dimensions of the tractor attachment are therefore within the dimensions prescribed by the traffic regulations, yet such tractor attachment is folded in a higher position, i.e. at a greater distance from the ground. As a result, such tractor attachment has a higher centre of gravity and thus poorer stability. As the tractor attachment is folded in a higher position at the same maximum transport height, the tractor attachment width is reduced and thus the working width is also reduced.

A further disadvantage of the solution with a dual Cardan shaft is a significant increase in manufacturing costs, making such a solution economically questionable.

JP H08 191610 A (Gono Yoshinori) describes an agricultural work machine with a folding mechanism for deploying and folding the left and right work portions around the pivot axis in the machine width direction of the central work portion and a rotational driving force applied to the work portion. A fluid pressure generator for generating the fluid pressure that drives the folding mechanism by the rotation is provided in addition to the rotation transmission system that transmits the above. The fluid pressure generator is preferably configured integrally with the transmission of the rotation transmission system. The fluid pressure generator generates a predetermined fluid pressure by a rotational driving force to drive the folding mechanism, and expands the left and right working portions.

US 4,136,743 (Ary van der Lely) describes a cultivating implement which has a main frame comprised of beams that support an elongated central frame portion that has rotatable soil working members mounted in a transverse row. At each lateral side of the central portion, an outer elongated frame portion, with a corresponding group of further soil working members, is pivoted. In working position, the outer portions comprise extensions of the central portion so that a broad strip of ground is worked. For transport, the outer portions can be pivoted upwardly by hydraulic assemblies about pivots that interconnect same to the central portion, and the central portion can be raised out of ground contact by further hydraulic assemblies that move rear ground wheels into supporting position. Each of the hydraulic assemblies has a latch that cooperates with a pin to retain the outer portions and ground wheels in transport position. A cable or rope to the operator can pivot and release the latch so that a working position can be assumed. Each frame portion can be linked to the main frame by parallelogram linkages to match ground undulations. Driving connections via respective gear boxes engage the p.t.o. of a prime mover.

EP 3 095 316 A1 describes an agricultural machine with the first hydraulic cylinder and the second hydraulic cylinder which are connected to each other in such a manner that when the second hydraulic cylinder is actuated by means of pressurized hydraulic fluid for pivoting the arm from the transport position towards the operational position hydraulic fluid discharged from the second hydraulic cylinder is supplied under pressure to the first hydraulic cylinder for displacing the sliding member outwards along the arm substantially from the start of the pivoting movement of the arm from the transport position.

EP 0 316 560 A1 (Deni Franz) describes an agricultural working machine with tool holders, which can be swung upwards hydraulically, is to be automatically locked mechanically by means of a pivotable bolt in the transport position, the bolt extending from the point of articulation of the lifting cylinder to the point of connection of the retracted piston rod. In the transport position, the bolt is connected positively to a sprung flap and can be pulled inwards together with this by means of a cable pull, with the result that the mechanical lock is released. In the transport position, a sprung stop is connected operatively to the lifting cylinder and assists the lowering of the toolholder into the working position.

There is a need for a tractor attachment that will overcome the above-identified disadvantages.

### Solution to the Technical Problem

The technical problem is solved by a tractor attachment having an assembly for Cardan shaft alignment, said assembly comprising a transmission mechanism, a thrust element and an alignment element; its main features are set out in the independent claim 1 below. Further characteristics are defined in dependent patent claims.

The alignment element is substantially an equilateral prism with four perpendicular sides and is arranged on a transverse drive shaft, such that two mutually parallel sides of the alignment element are parallel to the inner forks of the second Cardan joint and the other two mutually parallel sides of the alignment element are parallel to the outer forks of the second Cardan joint, wherein the thrust element is formed as an elongate element and is arranged on the mulching device frame, so that its longitudinal axis is perpendicular to the transverse drive shaft and that its lower surface facing the ground slides in translation along one of the sides of the alignment element when the latter is in the N*90° position.

The alignment element has a through borehole and is tightly coupled in a form-locking manner to the transverse drive shaft, the alignment element being a cube or a square.

The thrust element is configured in the form of a plate; it can also be configured as a round or square rod of such width that allows sliding attachment to the mulching device frame. When the rotor is in the transport position, the thrust element acts as a lock.

The Cardan shaft alignment assembly also comprises a movement transfer mechanism, which is formed to convert the rotary movement of the lifting support into a translational movement of the thrust element in a non-linearly synchronized manner. The movement transfer mechanism is formed as a system of levers, the first lever being pivotally attached to the lifting support and the rear lever being pivotally attached to the thrust element.

The agricultural trailing device may comprise more than one rotor, preferably two in-line rotors arranged next to each other and perpendicular to the direction of tractor's driving. In the case of two rotors, the transverse drive shaft and thus the alignment element are common to both rotors which are arranged symmetrically with respect to the tractor.

The process of moving the agricultural trailing device is carried out step by step, with each step being continuously transferred to the next step. The initial folding phase takes place in the Cardan shaft working area. In the second folding phase, when the lifting of the rotor exceeds the working area, the movement transfer mechanism transfers the rotational movement of the lifting support based on non-linear synchronization to the thrust element which translationally moves in the direction towards the alignment element, rotates it in the working direction until a side of the alignment element is parallel to the lower surface of the thrust element, i.e. α = N*90°. The final phase is folding to the final transport position of the rotor when the forks of the Cardan joint are aligned at an angle of substantially 90°.

The assembly for the alignment of the Cardan shaft of the invention, which is mounted on the tractor attachment, allows the user to fold or move a single tractor attachment without further manipulating the attachment, such as adjusting the Cardan shaft, releasing the Cardan brake or clutch, since the alignment of the Cardan shaft is always performed in the working direction.

A further advantage of the described solution is that the Cardan shaft is aligned substantially parallel to the ground, the point of rotation of the mulching device, when transferring said device from the working position to the transport position, is at the level of the Cardan shaft, so the transport height is equal to the working width and no reduction of the working width is necessary.

A further advantage of the solution of the invention is that the thrust element also acts as a mechanical lock on the drive shaft. Due to the alignment of the alignment element and the thrust element, torque transfer to the Cardan shaft is prevented when the drive is switched on. If the operator switched on the drive while the conventional tractor attachment is in the transport position, the Cardan joint is aligned at an angle of substantially 90° and does not transmit torque, so the entire torque from the drive shaft would be transferred to the Cardan shaft, which would result in the Cardan shaft getting damaged. This is prevented by the assembly for the Cardan shaft alignment of the invention.

The assembly for the Cardan shaft alignment of the invention is configured to allow a subsequent integration into existing machines.

The integration of the assembly for the Cardan shaft alignment is not limited only to mulching devices; the assembly can also be fitted to other tractor attachments such as harrows, lawn mowers, which must be folded from the working position to the transport position before being transported due to their width.

The alignment element that is mounted on the transverse drive shaft in the assembly for the Cardan shaft alignment of the invention can also be mounted directly on the Cardan shaft when the drive assembly is arranged above the mulching device frame.

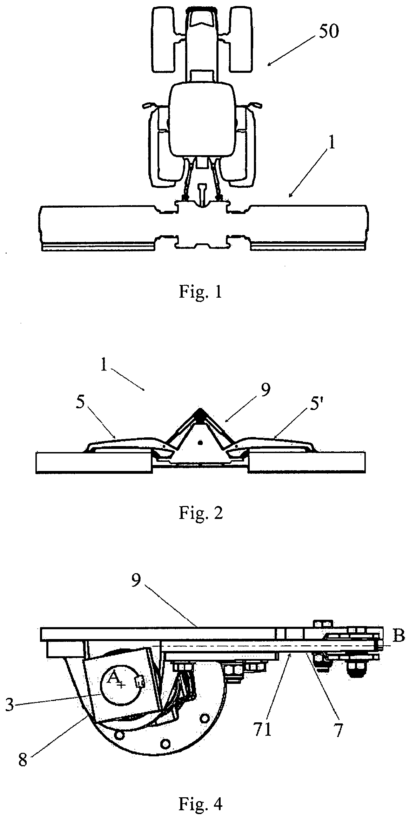

The invention will be described in more detail by way of an embodiment with reference to the accompanying drawings of which
Fig. 1 is a tractor with a trailing device
Fig. 2 is a tractor attachment, a mulching device

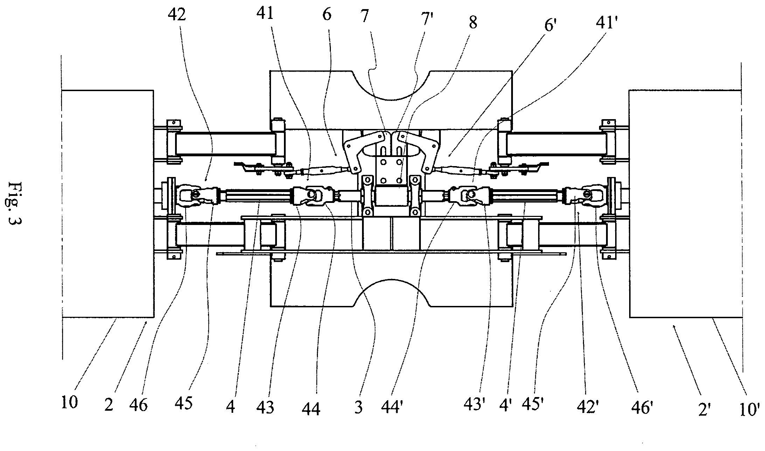

Fig. 3 is an assembly for the Cardan shaft alignment, bottom view
Fig. 4 is an assembly for the Cardan shaft alignment, cross section

Relative terms such as above, below, rear, front, etc. are defined with respect to the tractor attachment in the operating state when the tractor attachment is coupled to the tractor.

An agricultural trailing device in the form of a tractor attachment, such as a mulching device 1, is connected to a tractor body, such as a tractor 50, at its rear end, so that an operating member which is a rotor 2, 2' and is accommodated in a housing 10 extends perpendicularly to a driving direction V of the tractor 50. There are preferably two in-line rotors 2, 2' arranged in-line and perpendicular to the driving direction V of the tractor 50. The driving power is transmitted from the tractor via the drive assembly to both rotors 2, 2'. The drive assembly (not shown) consists of a connecting Cardan shaft, a Cardan brake, a multiplier and a clutch. The driving power is transferred from the drive assembly to the operating member of the trailing device, in the case of the mulching device 1 this is a rotor 2, 2', by means of a transverse drive shaft 3 and a Cardan shaft 4, 4'. The transverse drive shaft 3 is arranged perpendicularly to the connecting Cardan shaft (not shown), i.e. substantially perpendicularly to the driving direction V of the tractor, and is connected to the drive Cardan shaft via a gearbox of any known type. The transverse drive shaft 3 is common to both rotors 2, 2' which are arranged symmetrically with respect to the tractor. A first joint 41, 41' of the Cardan shaft 4, 4' connects the transverse drive shaft 3 and the Cardan shaft 4, 4', a second Cardan joint 42, 42' connects the Cardan shaft 4, 4' and the rotor 2, 2'.

The tractor attachment, i.e. the mulching device 1, has a base frame 9, on which a mechanism (not the subject of the invention) for lifting the mulching device is attached, a lifting support 5, 5' being part of said mechanism. A rotor 2, 2' with a housing 10 is attached to the lifting support 5, 5'. The rotor 2, 2' together with the housing 10 can be transferred from the working position to the transport position by means of the lifting mechanism. Each rotor 2, 2' has its own lifting mechanism. An assembly for the alignment of the Cardan shaft 4 for one rotor 2 will be described hereinbelow. Given that the rotors 2, 2' are arranged symmetrically, an identical yet symmetrical assembly for the alignment of the Cardan shaft 4, 4' is also used in the other rotor 2'. The assembly for the alignment of the Cardan shaft 4 and its operation on the first rotor 2 will be described hereinbelow.

While operating, the rotor 2 of the mulching device 1 is in the operating position and substantially aligned with the ground, which is provided by the Cardan shaft 4 with the Cardan joints 41, 42, wherein the Cardan shaft 4 assumes the angles between -20° and +20° relative to the horizontal, which still represents the normal operation of the Cardan shaft 4. When transferring the rotor 2 from the working position to the transport position, the second joint 42 of the Cardan shaft 4 must align to a substantially right angle, i.e. 90°. In this position, inner forks 45 and outer forks 46 of the second Cardan joint 42 reach a substantially right angle, i.e. 90°, so that the inner forks 45 of the second Cardan joint 42 are substantially perpendicular to the base and the outer forks 46 of the other Cardan joint 42 are substantially parallel to the ground. This position of the forks 45, 46 of the second Cardan joint 42 allows the rotor 2 to be rotated by substantially 90° about an axis parallel to the direction of tractor's driving, with the Cardan shaft 4 being substantially aligned with the ground. Such position of the forks 45, 46 is only possible in four positions of the full angle ϕ of the drive shaft, ϕ = N ^{∗} 90°, N = integer. The Cardan shaft 4 and thus the forks 45, 46 do not normally stop in the described position after the drive has stopped, so the Cardan shaft 4 must be placed to the required position.

According to the invention, the mulching device 1 has an integrated assembly 100 for the alignment of the Cardan shaft 4, comprising a movement transfer mechanism 6, a thrust element 7, and an alignment element 8. The alignment element 8 is substantially a rectangular equilateral prism with four rectangular sides, such as a cube or a square, having a through borehole 11. The alignment element 8 is arranged in the middle of the transverse drive shaft 3, in relation to its length, in a tight-fit manner, and is connected in a form-locking manner with the transverse drive shaft 3. The transverse drive shaft 3 is connected to the Cardan shaft 4 via a first Cardan joint 41 with forks 43, 44. The alignment element 8 is arranged on the transverse drive shaft 3 in a way that two mutually parallel sides of the rectangular prism, which is the alignment element 8, are parallel to the inner forks 45 of the first Cardan joint 41 and the other two mutually parallel sides of the prism are parallel to the outer forks 44 of the first Cardan joint 41. As a result, two mutually parallel sides of the rectangular prism, which is the alignment element 8, are parallel to the inner forks 45 of the second Cardan joint 42 and the other two mutually parallel sides of the prism are parallel to the outer forks 46 of the second Cardan joint 42. The alignment element 8 rotates with the drive shaft at a frequency that is the drive shaft frequency and occupies positions N ^{∗} 90° in the folded position, with N being an integer.

In the embodiment, the movement transfer mechanism 6 can be configured as a system of levers, the first lever being pivotally attached to the lifting support 5 which is part of the mechanism for lifting the rotor 2 from the working position to the transport position, and the rear lever being pivotally attached to the thrust element 7 which will be described hereinbelow. The movement transfer mechanism 6 is non-linearly synchronized with the lifting mechanism or the lifting support, on which it is attached, so that the rotational movement of the lifting support 5 is converted into a translational movement of the thrust element 7. The movement transfer mechanism 6 may also be configured as a wire rope or hydraulic mechanism.

The thrust element 7 is formed as an elongated element, in the embodiment configured as a plate-shaped element, and is slidably mounted on the base frame 9 of the mulching device 1 near the drive shaft 3 so that it can be moved translationally due to the operation of the movement transfer mechanism 6. The thrust element 7 is arranged on the frame 9 of the mulching device 1 near the drive shaft 3 such that its longitudinal axis B is perpendicular to the transverse drive shaft 3 or its axis A and thus perpendicular to the Cardan shaft 4 as well. At the same time, the thrust element 7 is arranged relative to the alignment element 8 in a way that a lower surface 71 of the thrust element 7 facing the ground slides in translation along one of the sides of the alignment element 8 when the latter is in the N*90° position.

The thrust element 7 may also be configured as a rod of a round or angular cross-section of sufficient width to allow sliding attachment to the housing of the mulching device 1.

In the initial phase of moving the rotor 2 from the working position to the transport position, the outer Cardan joint 42 is aligned in the range of the working angle, i.e., between -20° and +20° relative to the horizontal, with the transverse drive shaft 3 and thus the alignment element 8 being in any position and the rotation angle α being 0° ≤ α ≤ 90°. In this initial lifting phase, the thrust element 7 is in a position that is offset from the rotation region of the alignment element 8. In the second phase of lifting the rotor 2 towards the transport position, when the lifting of the rotor 2 exceeds the working area, the movement transfer mechanism 6 that is pivotally mounted on the lifting support 5 of the rotor 2, transfers the rotational movement of the lifting support 5 based on non-linear synchronization to the thrust element 7 which translationally moves in the direction towards the alignment element 8. In the case where the forks 43, 44 of the first Cardan joint 41, and thus the forks 45, 46 of the second Cardan joint 42, do not assume a substantially right angle, the alignment element 8 disposed on the transverse drive shaft 3 is rotated by a certain angle from its basic position. This is when 0° <α <90 ° and the thrust element 7 hits the side of the alignment element 8 and rotates it in the working direction until the side of the alignment element 8 is parallel to the lower face of the thrust element 7, i.e. α = N ^{∗} 90°. Also aligned to an angle of 90° are the forks 45, 46 of the Cardan joint 42 as well as the forks 43, 44 of the Cardan joint 41 of the Cardan shaft 4. The movement of the rotor 2 can continue without hindrances until the final transport position, in which the rotor 2 is substantially perpendicular to the direction of tractor's driving and an angle of folding of substantially 90° is achieved. As the point of rotation of the rotor 2, in terms of height, is substantially aligned with the Cardan joint 42 of the Cardan shaft 4, the entire permissible transport height is utilized. As a result, the working width of the rotor can be larger.

In the transport position of the rotor 2, when the Cardan joint 42 or its forks 45, 46 assume the position of a right angle, the Cardan joint 42 does not transmit torque. In this position, the thrust element 7 is located between the alignment element 8 and the frame 9 of the mulching device 1. When the drive is actuated, which would damage the Cardan shaft, the thrust element 7 acts as a lock, which prevents the torque from being transmitted to the Cardan shaft 4 and causing its destruction.

The alignment element 8 and the thrust element 7 occupy a mutual parallel position. In the event of actuation of the drive, the thrust element 7 acts as a lock to prevent damage to the Cardan shaft 4, 4'.

The movement of the rotor 2 from the transport position to the working position is executed in the opposite direction, with the pusher element 7 getting displaced from the rotation region of the alignment element 7 when the rotor 2 reaches the working position.

The rotation of the alignment element 8 and thereby the transverse drive shaft 3, regardless of the position of the Cardan shaft 4 and the forks 43, 44; 45, 46, is always executed in the same direction, i.e. in the working direction. The clutch in the drive assembly needs therefore not be disengaged.

In the embodiment, two rotors 2, 2' are mounted on the tractor attachment and are transferred into the transport position independently of each other. Therefore, each rotor 2, 2' has its own Cardan shaft alignment assembly, with the alignment element 8 arranged on the transverse drive shaft 3 being common to both of them. In the case of a common alignment element 8, the alignment is performed by the rotor 2, 2' which is first lifted to the transport position.

## Claims

1. An agricultural trailing device in the form of a tractor attachment, such as a
mulching device (1), that is attachable to a tractor (50), which device comprises a frame (9),
in which an operating member of the trailing device, which is a rotor (2, 2'), is arranged,
wherein the rotor (2, 2'),
which is accommodated in a housing (10), extends perpendicularly to the direction of tractor's driving and is connected with the tractor (50) via a power transmission drive assembly, and
is pivotally mounted on the frame by means of a lifting support (5, 5'), a mechanism, arranged within the frame, for lifting the rotor from the operating position to the transport position, the lifting support being part of said mechanism,
a drive shaft (3) arranged on the trailing device substantially perpendicularly to the direction of tractor's driving,
and a Cardan shaft (4, 4') which is connected to the drive shaft with one of its Cardan joints comprising forks and connected with a second Cardan joint comprising forks to the operating member of the trailing device which is a rotor,
**characterized by**
having an integrated assembly (100) for the alignment of the Cardan shaft (4, 4') comprising a movement transfer mechanism (6), a thrust element (7), and an alignment element (8),
wherein the alignment element (8) is substantially an equilateral prism with four perpendicular sides and is arranged on a transverse drive shaft (3), such that two mutually parallel sides of the alignment element (8) are parallel to the inner forks (45) of the second Cardan joint (42) and the other two mutually parallel sides of the alignment element (8) are parallel to the outer forks (46) of the second Cardan joint (42),
wherein the thrust element (7) is formed as an elongate element and is arranged on the trailing device frame (9), so that its longitudinal axis (B) is perpendicular to the transverse drive shaft (3) and that its lower surface (71) facing the ground slides in translation along one of the sides of the alignment element (8) when the latter is in the N*90° position,
wherein the movement transfer mechanism (6) is formed to convert the rotary movement of the lifting support (5) into a translational movement of the thrust element (7) in a non-linearly synchronized manner.

2. Agricultural trailing device according to claim 1, **characterized in that** the alignment element (8) has a through borehole and is tightly coupled in a form-locking manner to the transverse drive shaft (3).

3. Agricultural trailing device according to any of preceding claims, **characterized in that** the alignment element (8) is a cube or a square.

4. Agricultural trailing device according to any of preceding claims, **characterized in that** the thrust element (7) is configured as a plate.

5. Agricultural trailing device according to any of preceding claims, **characterized in that** the thrust element (7) is configured as a round or square rod of such width that allows sliding attachment to the trailing device frame.

6. Agricultural trailing device according to any of preceding claims, **characterized in that** the thrust element (7) is configured to act as a lock when the rotor (2, 2') is in the transport position.

7. Agricultural trailing device according to claim 1, **characterized in that** the movement transfer mechanism (6) is formed as a system of levers consisting of a plurality of levers, the first lever being pivotally attached to the lifting support (5) and the rear lever being pivotally attached to the thrust element (7).

8. Agricultural trailing device according to any preceding claim, **characterized by** comprising more than one rotor, preferably two in-line rotors (2, 2') aligned next to each other and perpendicular to the direction (V) of tractor's driving.

9. Agricultural trailing device according to claim 10, **characterized in that** the transverse drive shaft (3) is common to both rotors (2, 2') which are arranged symmetrically with respect to the tractor.

10. Agricultural trailing device according to any of preceding claims, **characterized in that** the device is a mulching device, a harrow, or a lawn mower.

11. Method of moving the agricultural trailer according to preceding claims,
**characterized in that** folding follows the steps
- initial folding phase that takes place in the Cardan shaft (4) working area,
- second folding phase, when the lifting of the rotor (2) exceeds the working area, the movement transfer mechanism (6) transfers the rotational movement of the lifting support (5) based on non-linear synchronization to the thrust element (7) which translationally moves in the direction towards the alignment element (8), rotates it in the working direction until a side of the alignment element (8) is parallel to the lower surface of the thrust element (7), i.e. α = N^{∗}90°,
- final phase of folding to the final transport position of the rotor (2, 2') when the forks (43, 44; 45, 46) of the Cardan joint (41, 42) are aligned at an angle of substantially 90°.

## Patentansprüche

1. Landwirtschaftliche Anhängevorrichtung in Form eines Traktoranbaus, zum Beispiel als Mulchvorrichtung (1), die an einem Traktor (50) befestigbar ist,
wobei die Vorrichtung Folgendes umfasst:
einen Rahmen (9), in dem ein Betätigungselement der Anhängevorrichtung, das ein Rotor (2, 2') ist, angeordnet ist, wobei sich der Rotor (2, 2'), der in einem Gehäuse (10) untergebracht ist, senkrecht zur Fahrtrichtung des Traktors erstreckt und über eine Stromübertragungsantriebsbaugruppe mit dem Traktor (50) verbunden ist und mittels eines Hubträgers (5, 5') verschwenkbar am Rahmen montiert ist,
einen innerhalb des Rahmens angeordneten Mechanismus zum Heben des Rotors aus der Betriebsstellung in die Transportstellung, wobei der Hubträger Teil des Mechanismus ist,
eine Antriebswelle (3), die im Wesentlichen senkrecht zur Fahrtrichtung des Traktors an der Anhängevorrichtung angeordnet ist,
und eine Kardanwelle (4, 4'), die mit der Antriebswelle verbunden ist, wobei eines der Kardangelenke eine Gabel umfasst und mit einem zweiten eine Gabel umfassenden Kardangelenk mit dem Betätigungselement der Anhängevorrichtung, das ein Rotor ist, verbunden ist,
**gekennzeichnet durch**
das Aufweisen einer integrierten Baugruppe (100) zum Ausrichten der Kardanwelle (4, 4'), umfassend einen Bewegungsübertragungsmechanismus (6), ein Schubelement (7) und ein Ausrichtungselement (8),
wobei das Ausrichtungselement (8) im Wesentlichen ein gleichseitiges Prisma mit vier senkrechten Seiten ist und an einer quer angeordneten Antriebswelle (3) angeordnet ist, sodass zwei zueinander parallele Seiten des Ausrichtungselements (8) parallel zur inneren Gabel (45) des zweiten Kardangelenks (42) sind und die anderen zwei zueinander parallelen Seiten des Ausrichtungselements (8) parallel zur äußeren Gabel (46) des zweiten Kardangelenks (42) sind,
wobei das Schubelement (7) als längliches Element ausgebildet und am Anhängevorrichtungsrahmen (9) angeordnet ist, sodass dessen Längsachse (B) senkrecht zur quer angeordneten Antriebswelle (3) ist und sich seine dem Boden zugewandte untere Fläche (71) entlang einer der Seiten des Ausrichtungselements (8) verschiebt, wenn sich dieses in der Stellung N*90° befindet,
wobei der Bewegungsübertragungsmechanismus (6) dazu ausgebildet ist, die Drehbewegung des Hubträgers (5) in eine Verschiebungsbewegung des Schubelements (7) auf nichtlinear synchronisierte Weise umzuwandeln.

2. Landwirtschaftliche Anhängevorrichtung nach Anspruch 1, **dadurch gekennzeichnet, dass** das Ausrichtungselement (8) eine Durchgangsbohrung aufweist und formschlüssig eng mit der quer angeordneten Antriebswelle (3) gekoppelt ist.

3. Landwirtschaftliche Anhängevorrichtung nach einem der vorstehenden Ansprüche, **dadurch gekennzeichnet, dass** das Ausrichtungselement (8) ein Würfel oder ein Quadrat ist.

4. Landwirtschaftliche Anhängevorrichtung nach einem der vorstehenden Ansprüche, **dadurch gekennzeichnet, dass** das Schubelement (7) als Platte ausgelegt ist.

5. Landwirtschaftliche Anhängevorrichtung nach einem der vorstehenden Ansprüche, **dadurch gekennzeichnet, dass** das Schubelement (7) als runder oder quadratischer Stab ausgelegt ist, dessen Breite eine Verschiebebefestigung am Anhängevorrichtungsrahmen zulässt.

6. Landwirtschaftliche Anhängevorrichtung nach einem der vorstehenden Ansprüche, **dadurch gekennzeichnet, dass** das Schubelement (7) dazu ausgelegt ist, als Arretierung zu wirken, wenn sich der Rotor (2, 2') in der Transportstellung befindet.

7. Landwirtschaftliche Anhängevorrichtung nach Anspruch 1, **dadurch gekennzeichnet, dass** der Bewegungsübertragungsmechanismus (6) als Hebelsystem bestehend aus mehreren Hebeln ausgebildet ist, wobei der erste Hebel verschwenkbar am Hubträger (5) befestigt ist und der hintere Hebel verschwenkbar am Schubelement (7) befestigt ist.

8. Landwirtschaftliche Anhängevorrichtung nach einem der vorstehenden Ansprüche, **gekennzeichnet durch** das Umfassen von mindestens einem Rotor, vorzugsweise zwei in Reihe geschaltete Rotoren (2, 2'), die nebeneinander und senkrecht zur Fahrtrichtung (V) des Traktors ausgerichtet sind.

9. Landwirtschaftliche Anhängevorrichtung nach Anspruch 10, **dadurch gekennzeichnet, dass** die quer angeordnete Antriebswelle (3) beiden Rotoren (2, 2') gemein ist, die in Bezug zum Traktor symmetrisch angeordnet sind.

10. Landwirtschaftliche Anhängevorrichtung nach einem der vorstehenden Ansprüche, **dadurch gekennzeichnet, dass** die Vorrichtung eine Mulchvorrichtung, eine Egge oder ein Rasenmäher ist.

11. Verfahren zum Bewegen der landwirtschaftlichen Anhängevorrichtung nach einem der vorstehenden Ansprüche, **dadurch gekennzeichnet, dass** das Zusammenklappen die folgenden Schritte umfasst:
- anfängliche Klappphase, die im Arbeitsbereich der Kardanwelle (4) stattfindet,
- zweite Klappphase, wenn das Heben des Rotors (2) den Arbeitsbereich überschreitet, wobei der Bewegungsübertragungsmechanismus (6) die Drehbewegung des Hebeträgers (5) auf Grundlage der nichtlinearen Synchronisierung auf das Schubelement (7) überträgt, das sich verschiebend in die Richtung zum Ausrichtungselement (8) bewegt, dieses in die Arbeitsrichtung dreht, bis eine Seite des Ausrichtungselements (8) parallel zur unteren Fläche des Schubelements (7) ist, d. h. α = N*90°,
- abschließende Klappphase in die abschließende Transportstellung des Rotors (2, 2'), wenn die Gabeln (43, 44; 45, 46) des Kardangelenks (41, 42) in einem Winkel von im Wesentlichen 90° ausgerichtet sind.

## Revendications

1. Dispositif agricole à remorquer, sous la forme d'un accessoire à atteler pour tracteur, tel qu'un dispositif de paillage (1), qui peut être attelé à un tracteur (50),
lequel dispositif comprend
un bâti (9), dans lequel un organe d'actionnement du dispositif à remorquer, qui est un rotor (2, 2'), est agencé,
dans lequel le rotor (2, 2'), qui est logé dans un logement (10), s'étend perpendiculairement à la direction de la conduite du tracteur et est relié au tracteur (50) par l'intermédiaire d'un ensemble d'entraînement à transmission de puissance, et est monté de façon pivotante sur le bâti au moyen d'un support de levage (5, 5'),
un mécanisme, agencé à l'intérieur du bâti, pour lever le rotor, de la position d'actionnement à la position de transport, le support de levage faisant partie dudit mécanisme,
un arbre d'entraînement (3) agencé sur le dispositif à remorquer de façon sensiblement perpendiculaire à la direction de la conduite du tracteur,
et un arbre à Cardan (4, 4') qui est relié à l'arbre d'entraînement avec un de ses joints à Cardan comprenant des fourches et relié, avec un second joint à Cardan comprenant des fourches, à l'organe d'actionnement du dispositif à remorquer qui est un rotor,
**caractérisé en ce que**
il a un ensemble intégré (100) pour l'alignement de l'arbre à Cardan (4, 4') comprenant un mécanisme de transfert de mouvement (6), un élément de poussée (7), et un élément d'alignement (8),
dans lequel l'élément d'alignement (8) est sensiblement un prisme équilatéral avec quatre côtés perpendiculaires et est agencé sur un arbre d'entraînement transversal (3), de telle sorte que deux côtés mutuellement parallèles de l'élément d'alignement (8) soient parallèles aux fourches intérieures (45) du second joint à Cardan (42) et les deux autres côtés mutuellement parallèles de l'élément d'alignement (8) soient parallèles aux fourches extérieures (46) du second joint à Cardan (42),
dans lequel l'élément de poussée (7) est sous la forme d'un élément allongé et est agencé sur le bâti de dispositif à remorquer (9), pour que son axe longitudinal (B) soit perpendiculaire à l'arbre d'entraînement transversal (3) et que sa surface inférieure (71) faisant face au sol coulisse en translation le long d'un des côtés de l'élément d'alignement (8) lorsque ce dernier est dans la position N * 90 °,
dans lequel le mécanisme de transfert de mouvement (6) est formé pour convertir le mouvement rotatif du support de levage (5) en un mouvement translationnel de l'élément de poussée (7) de manière synchronisée de façon non linéaire.

2. Dispositif agricole à remorquer selon la revendication 1, **caractérisé en ce que** l'élément d'alignement (8) a un trou d'alésage débouchant et est couplé, de façon serrée, de manière à verrouillage de forme, à l'arbre d'entraînement transversal (3).

3. Dispositif agricole à remorquer selon l'une quelconque des revendications précédentes, **caractérisé en ce que** l'élément d'alignement (8) est un cube ou un carré.

4. Dispositif agricole à remorquer selon l'une quelconque des revendications précédentes, **caractérisé en ce que** l'élément de poussée (7) est configuré sous forme de plaque.

5. Dispositif agricole à remorquer selon l'une quelconque des revendications précédentes, **caractérisé en ce que** l'élément de poussée (7) est configuré sous forme de tige ronde ou carrée de largeur telle qui permet la fixation coulissante au bâti de dispositif à remorquer.

6. Dispositif agricole à remorquer selon l'une quelconque des revendications précédentes, **caractérisé en ce que** l'élément de poussée (7) est configuré pour servir de verrouillage lorsque le rotor (2, 2') est dans la position de transport.

7. Dispositif agricole à remorquer selon la revendication 1, **caractérisé en ce que** le mécanisme de transfert de mouvement (6) est sous la forme d'un système de leviers constitué d'une pluralité de leviers, le premier levier étant fixé de façon pivotante au support de levage (5) et le levier arrière étant fixé de façon pivotante à l'élément de poussée (7).

8. Dispositif agricole à remorquer selon une quelconque revendication précédente, **caractérisé en ce qu'**il comprend plus d'un rotor, de préférence deux rotors en ligne (2, 2') alignés l'un à côté de l'autre et perpendiculaires à la direction (V) de la conduite du tracteur.

9. Dispositif agricole à remorquer selon la revendication 10, **caractérisé en ce que** l'arbre d'entraînement transversal (3) est commun aux deux rotors (2, 2') qui sont agencés symétriquement par rapport au tracteur.

10. Dispositif agricole à remorquer selon l'une quelconque des revendications précédentes, **caractérisé en ce que** le dispositif est un dispositif de paillage, une herse, ou une tondeuse à gazon.

11. Procédé de mise en mouvement de la remorque agricole selon les revendications précédentes, **caractérisé en ce qu'**un pliage suit les étapes
- une phase de pliage initiale qui a lieu dans la zone de fonctionnement de l'arbre à Cardan (4),
- une seconde phase de pliage, lorsque le levage du rotor (2) dépasse la zone de fonctionnement, le mécanisme de transfert de mouvement (6) transfère le mouvement rotationnel du support de levage (5), sur la base de synchronisation non linéaire, à l'élément de poussée (7) qui se meut de façon translationnelle dans la direction vers l'élément d'alignement (8), le met en rotation dans la direction de fonctionnement jusqu'à ce qu'un côté de l'élément d'alignement (8) soit parallèle à la surface inférieure de l'élément de poussée (7), à savoir α = N * 90 °,
- une phase de pliage finale jusqu'à la position de transport finale du rotor (2, 2) lorsque les fourches (43, 44 ; 45, 46) du joint à Cardan (41, 42) sont alignées à un angle de sensiblement 90 °.
